# EUROPÄISCHE PATENTSCHRIFT

(11) **EP 2 088 406 B1**
(45) Veröffentlichungstag und Bekanntmachung des Hinweises auf die Patenterteilung: **21.03.2012**
(21) Anmeldenummer: 08151093.5
(22) Anmeldetag: 06.02.2008
(51) Int. Cl.: G01G 21/28

(54) **Waage mit Windschutzeinrichtung**
Weighing machine with windshield
Balance dotée d'un dispositif de protection contre le vent

(43) Veröffentlichungstag der Anmeldung: 12.08.2009
(73) Patentinhaber: Mettler-Toledo AG, 8606 Greifensee (CH)
(72) Erfinder: Mock, Daniel, 8102, Oberengstringen (CH)

(56) Entgegenhaltungen:
- DE-A1- 19 849 399
- DE-U1- 9 313 902
- JP-A- 2005 227 212
- US-A1- 2006 185 909

## Beschreibung

Die Erfindung betrifft eine Waage mit einem Waagengehäuse zur Unterbringung der Funktionselemente der Waage, wobei das Waagengehäuse für eine für den Betrieb aufgestellte Waage an seiner Oberseite eine Öffnung für den Durchtritt der Lasteinleitung aufweist, und mit einer Windschutzeinrichtung ausgestattet ist, die als Ganzes vom Waagengehäuse lösbar und an diesern fixierbar ist, wobei auch der Boden der Windschutzeinrichtung eine mit der Öffnung des Waagengehäüses korrespondierende Öffnung für den Durchtritt der Lasteinleitung aufweist.

Windschutzeinrichtungen dienen dem Zweck, bei Präzisionswaagen dafür zu sorgen, daß es zu keiner Verfälschung des Wägeergebnises durch Luftbewegungen kommen kann. Dazu verfügen die Windschutzeinrichtungen in der Regel über einen Boden, Seitenwände und einen Deckel, wobei in der Regel die Seitenwände und/oder der Deckel öffenbar sind, um das Wägegut einzubringen. Um die Wägung durchzuführen, Wird dabei die Lasteinleitung auch in diese Windschutzeinrichtung geführt welche dann mit einer Aufnahme für das Wägegut, beispielsweise einer Waagschale versehen ist.

Aus der DE 198 49 399 A1 ist eine Waage der eingangs genannten Art bekannt, bei der der windschutz auf das Waagengehäuse gesetzt werden kann und dann ein Verriegelungsschieber betätigt wird, welcher eine feste Verbindung zwischen dem Waagengehäuse und dem Windschutz herstellt. Der Nachteil eines solchen Verriegelungsschiebers besteht in der komplizierten Mechanik, die in der Bodenplatte der Windschutzeinrichtung untergebracht werden muß. So ist eine Schieberführung erforderlich, die sowohl die Schiebebewegung ermöglicht als auch dem Verriegelungsschieber einen sicheren Halt gibt, und es ist weiterhin erforderlich sowohl den Verriegelungsschieber als auch die Gehäuseoberseite mit entsprechenden Verriegelungselementen zu versehen. Dieser Mechanismus, insbesondere die Führung des Verriegelungsschiebers ist schwer reinigbar und erfordert für eine gründliche Reinigung eine Demontage. Weiterhin wird durch die Dicke des Bodens der Windschutzeinrichtung die Bauhöhe der Waage erhöht, was die Bedienerfreundlichkeit verringert, insbesondere die Ergonomie beim Bedienen der Waage im Hinblick auf den Zugriff zur Waagschale verschfechtert.

Der Erfindung liegt daher die Aufgabe zugrunde, eine Waage der eingangs genannten Art bei möglichst niedriger Bauhöhe mit einer einfachen und reinigungsfreundlichen Befestigungsvorrichtung für die Windschutzeinrichtung auszustatten.

Die Aufgabe wird erfindungsgemäß dadurch gelöst, daß die Windschutzeinrichtung zentral an dem Durchtritt der Lasteinleitung befestigbar ist, indem der Rand der Öffnung an der Oberseite de Waage als ein erstes Teil einer Befestigungseinrichtung ausgestaltet ist und mit einem zur Fixierung der Windschutzeinrichtung am Waagengehäuse ausgestalteten zweiten Teil der Befestigungseinrichtung, das an der Öffnung des Bodens der Windschutzeinrichtung angeordnet ist, im Sinne einer förmschlüssigen Verbindung zusammenwirkt.

Der Vorteil der Erfindung besteht darin, daß der Boden der Windschutzeinrichtung als einfache Platte ausgebildet sein kann, die lediglich mit dem zweiten Teil der Befestigungseinrichtung versehen ist, ansonsten jedoch keine weiteren Bauteile wie Führungen vorhanden sind. Die Verbindung des zweiten Teils der Befestigungseinrichtung mit dem Boden kann auf einfache Weise vorgenommen werden, so daß die Bauhöhe des Bodens und damit der Waage niedrig gehalten wird und eine einfache Reinigung möglich ist.

Eine wesentliche Verbesserung im Sinne der oben genannten Aufgabe wird noch dadurch erreicht, daß das zweite Teil der Befestigungseinrichtung mit dem Boden der Windschutzeinrichtung in leicht lösbarer Weise verbunden ist. Leicht lösbar in diesem Sinn heißt ohne jegliches Werkzeug und mit einem einfachen Handgriff. Auf diese Weise kann durch das Lösen des zweiten Teils der Befestigungseinrichtung auf einfachste Weise eine Reinigung durchgeführt werden, da dann nur noch die Bodenplatte mit ihrer Öffnung gereinigt werden muß. Irgendwelche Zusatzteile, insbesondere solche von komptiziertern Aufbau, sind dann überhaupt nicht mehr vorhanden. Das entfernte zweite Teil der Befestigungseinrichtung kann als einfach aufgebautes Teil ausgeführt werden, das einer separaten Reinigung zugeführt werden kann, die, dann ebenfalls einfach vorzunehmen ist.

Die Verbindung des zweiten Teils der Befestigungseinrichtung mit dem Boden der Windschutzeinrichtung kann auf verschiedene Weise erfolgen. Es ist möglich, daß diese Teile derart ausgebildet sind, daß das zweite Teil der Befestigungseinrichtung in den Boden einklickbar oder einschraubbar ist. Besonders vorteilhaft ist es jedoch, wenn das zweite Teil der Befestigungseinnchtung ringförmig ausgebildet mit der Öffnung des Bodens als Bajonettverschluß zusammenwirkt. Auf diese Weise läßt es sich besonders einfach entfernen und wieder anfügen, so daß die Reinigung auf einfachste Weise vorgenommen werden kann.

Eine Ausgestaltüng sieht vor, daß das zweite Teil der Befestigungseinrichtung auskragende Vorsprünge aufweist, welche in Ausnehmungen der Öffnung des Bodens einfügbar sind, um durch Verdrehen in der Öffnung dieses zweite Teil der Befestigungseinrichtung mit dem Boden zu verbinden. Zweckmäßigerweise wird dabei die Bodenunterseite mit mindestens einer als Anschlag dienenden Drehbegrenzung ausgestattet.

Eine Weiterbildung sieht noch vor, daß das zweite Teil der Befestigungseinrichtung an seiner Oberseite einen zum Auffangen und Ableiten von Flüssigkeiten ausgebildeten Kanal aufweist. Dadurch kann verhindert werden, daß verschüttetete Flüssigkeiten möglicherweise in das Waageinnere gelangen und die Funktion beeinträchtigen können.

Auch das erste und das zweite Teil der Befestigungseinrichtung für die Windschutzeinrichtung am Waagengehäuse kann auf verschiedene Weise ausgebildet werden, wobei es auch hier zweckmäßig ist, einen Bajonettverschluß vorzusehen. Dieser kann ähnlich dem oben beschriebenen Bajonettverschluß des zweiten Teils der Befestigungsvorrichtung im Boden der Windschutzeinrichtung aufgebaut sein. Alternativ können natürlich auch weitere Ausgestaltungen von Bajonettverschlüssen Anwendung finden, wie beispielsweise mittels Stiften, Schlitzen und Federn oder dergleichen.

Zweckmäßigerweise wird auch der Halt dieses Bajonettverschlusses durch einen Kraftschluß gesichert. Dieser ist durch eine geringere Kraftanwendung überwindbar als der Halt des zweiten Teils des Bajonettverschlusses im Boden, damit beim Anfügen oder Lösen der Windschutzeinrichtung dieses zweite Teil der Befestigungseinrichtung mit dem Boden der Windschutzeinrichtung verbunden bleibt.

Die Tatsache daß die Windschutzeinrichtung zentral an dem Durchtritt der Lasteinleitung befestigt ist, ermöglicht es auch, daß der Boden der Windschutzeinrichtung als Stoßdämpfer wirken kann, indem er aus einem Material mit federnden und dämpfenden Eigenschaften besteht. Auf diese Weise werden eventuelle Stöße auf die Wihdschutzeinrichtung nur gedämpft auf die Waage übertragen. Der Vörteil ist ein schnelleres Abklingen solchen Stoß hervorgerufenen Schwingungen, was die Wartezeit bis zur Vornahme eines Wiegevorgangs verkürzt, also Zeitverluste vermeidet.

Schließlich ist es auch möglich, daß eine metallische Bodenplatte zur Erdung zwischen der Oberseite des Waagengehäuses und dem Boden der Windschutzeinrichtung einfügbar ist. Dies sollte insbesondere dann vorgesehen sein, wenn der Boden der Windschutzeinrichtung aus Kunststoff oder einem sonstigen nicht leitenden Stoff besteht.

Die Windschutzeinrichtung als solche kann in bekannter Weise ausgestaltet sein, beispielsweise mit Seitenwänden, die zum Schließen und Öffnen verschiebbar in Nuten geführt sind. Es ist wünschenswert, wenn sämtliche Wände zum Reinigen entfernbar sind. Auch der Deckel kann durch Schieben oder Aufklappen zum Einbringen und Entfernen des Wägeguts geöffnet werden.

Zur Erläuterung der Erfindung ist eine Ausführungsform mit einigen Einzuteilen in der Zeichnung dargestellt. Es zeigen
- Fig: 1: eine Waage mit Waagengehäuse und Windschutzeinrichtung,
- Fig. 2: ein zweites Teil der Befestigungseinrichtung von oben,
- Fig. 3: das zweite Teil der Befestigungseinrichtung von unten und
- Fig. 4: den Boden der Windschutzeinrichtung und das zweite Teil der Befestigungseinrichtung.

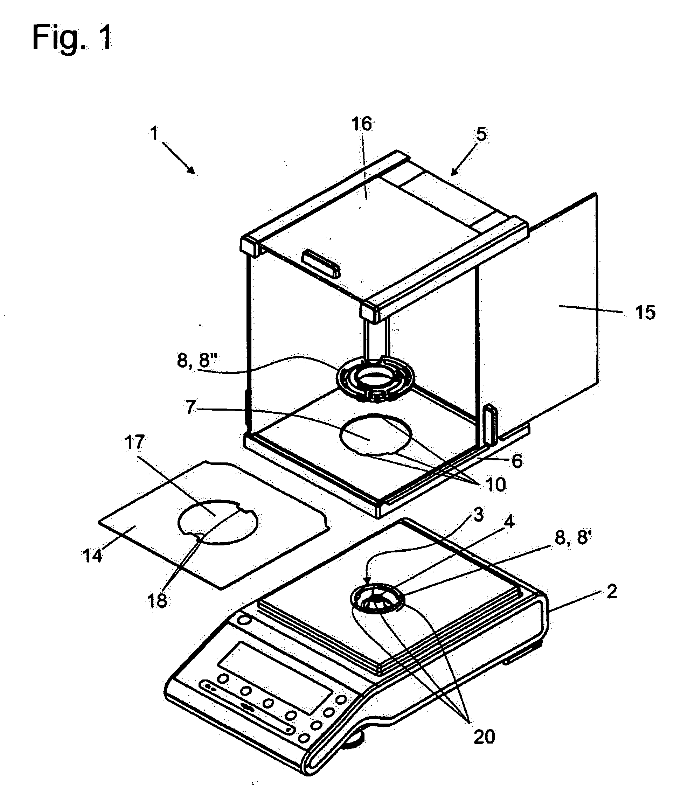

Fig. 1 zeigt eine Waage 1 mit Waagengehäuse 2 und einer Windschutzeinrichtung 5. Die Windschütreinrichtung 5 wurde vom Waagengehaüse 2 abgenommen, wodurch das erste Teil 8' der Befestigungseinrichtung 8 am Waagengehäuse 2 sichtbar wurde. Dieses erste Teil 8' der Befestigungseinrichtung 8 ist am Rand der Öffnung 3 angeordnet, welche der Lasfeinleitung 4 dient. Auf diese Lasteinleitung 4 wird eine Aufnähme für das Wägegut aufgesetzt, beispielsweise eine Waagschale.

Damit Luftzüge die Präzision des Wägevorgangs nicht beeinträchtigen können, wird auf das Waagengehäuse 2 die Windschutzeinrichtung 5 aufgesetzt. Dazu dient ein zweites Teil 8'' der Befestigungseinrichtung 8. Dieses kann mit dem ersten Teil 8' der Befestigungseinchtung 8 als Bajonettverschluß zusammewirken, wie dies hier zeichnerisch angedeutet ist. Dabei sind verschiedene Ausgestaltungen von Bajonettverschlüssen möglich, wie dies dem Fachmann bekannt ist.

Wesentlich ist dieser einfache Aufbau der Befestigungseinrichtung 8 und die Anordnung an der Öffnung 3 der Lasteinleitung 4 des Waagengehäuses 2 sowie die Anordnung in der Öffnung 7 des Bodens 6 der Windschutzeinrichtung 5. Das erste Teil 8' und das zweite Teil 8" der Befestigungseinrichtung 8 können einfach in die Öffnungen 3 und 7 eingefügt werden bzw. dort angeordnet sein. Weitere Elemente oder spezielte Ausgestaltungen sind nicht erforderlich. Dadurch sind eine geringe Bauhöhe, ein einfächer Aufbau und eine leichte Reinigung möglich.

Besonders zweckmäßig ist es jedoch, wenn das zweite Teil 8" der Befestigungseinrichtung 8 auf einfache Weise in den Boden 6 einfügbar und aus diesem wieder entfernbar ist. Dadurch läßt sich insbesondere der Boden 6 der Windschutzeinrichtung 5 noch leichter und besser reinigen, und das zweite Teil 8'' der Befestigungseinrichtung 8 kann separat ebenfalls auf einfache Weise gründlich gereinigt werden.

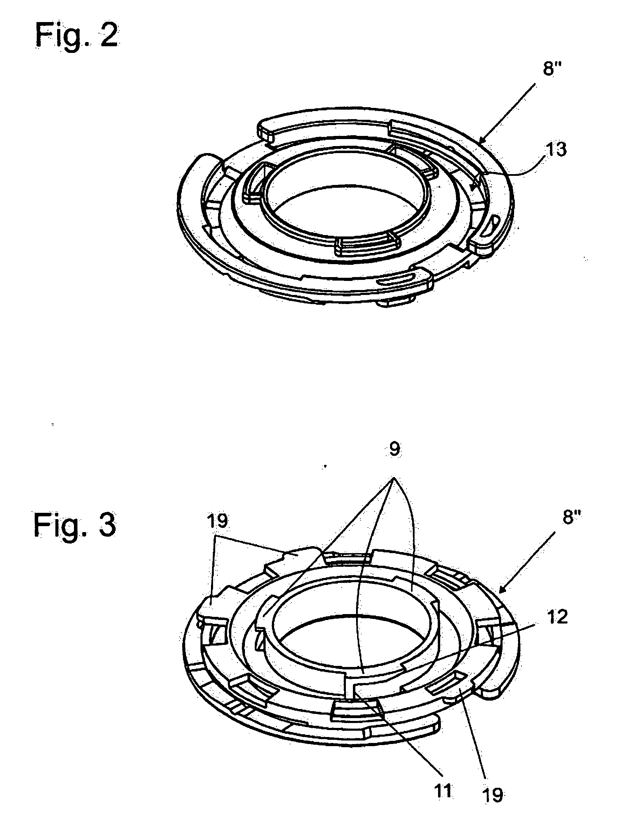

Die Einfügung des zweiten Teils 8'' der Befestigungseinrichtung 8 kann mittels eines Bajonettverschlusses erfolgen, beispielsweise indem die in Fig. 3 dargestellten auskragenden ersten Vorsprünge 19 in Ausnehmungen 10 der Öffnung 7 am Boden 6 der Windschutzeinrichtung 5 eingeführt und durch eine Drehbewegung gesichert werden. Bei dieser Drehbewegung untergreifen die ersten Vorsprünge 19 den Rand der Öffnung 7 bis eine Drehbegrenzung, als Anschlag dienend, die Drehbewung begrenzt.

**Figur 1** zeigt weiterhin, eine metallische Bodenplatte 14, welche nach dem Aufsetzen der Windschutzeinrichtung 5 auf dem Waagengehäuse 2 in den Boden 6 der Windschutzeinrichtung 5 eingefügt werden kann, um für eine Erdung zu sorgen. Auch diese metallische Bodenplatte 14 weist natürlich eine Öffnung 17 für den Durchtritt der Lasteinleitung 4 auf. Dort können Nasen 18 vorgesehen sein, welche mit Ausnehmungen an der Befestigungseinrichtung 8 zusammenwirken, so, dass die metallische Bodenplatte 14 nur in einer Position de zweiten Teils 8" der Befestigungseinrichtung 8 eingesetzt werden kann, wodurch eine falsche Montage verhindert wird.

**Figur 2** zeigt das zweite Teil 8'' der Befestigungseinrichtung 8 von oben, wodurch der Kanal 13 sichtbar ist, der dazu dient, versehentlich verschüttete Flüssigkeiten aufzunehmen, zwischen dem Boden 6 der Windschutzeinrichtung 5 und der Oberseite des Waagengehäuses 2 abzuleiten und somit dafür sorgt, daß diese nicht in das Innere des Waagengehäuses 2 gelangen können.

Die **Figur 3** zeigt das zweite Teil 8" der Befestigungseinrichtung 8 von unten. Es sind zweite Vorsprünge 9 erkennbar, weiche beim Befestigen der Windschutzeinrichtung 5 am Waagengehäuse 2 in entsprechende Aussparungen 20 der Öffnung 3 eingreifen, wobei durch eine Drehbewegung des zweiten Teils 8" der Befestigungseinrichtung 8 dieses fest mit dem Waagengehäuse 2 verbunden wird. Die Vorsprünge 9 Weisen jeweils eine Drehbegrenzung 11 als Anschlag dienend auf. Damit es nicht zu einem versehenttichen Lösen des zweiten Teils 8" der Befestigungseinrichtung 8 kommt, sind Einlaufschrägen 12 an den Vorsprüngen 9 vorgesehen, die dafür sorgen, daß ein gewisser Kraftschluß auftritt.

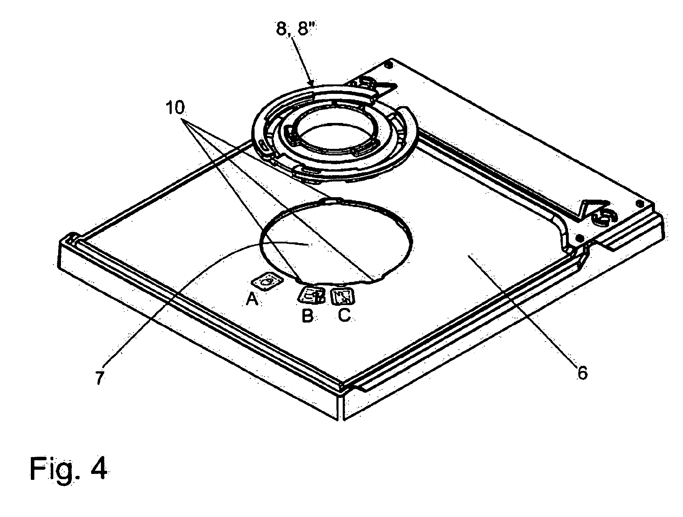

In der **Figur 4** sind der Boden 6 der Windschutzeinrichtung 5 und das zweiter Teil 8'' der Befestigungseinrichtung 8 zu sehen. In seiner verbindung mit dem Boden 6 der Windschutzeinrichtung 5 kann das zweite Teil 8" der Befestigungseinrichtung 8 drei Positionen einehmen. In der Position C - gekennzeichnet durch ein Werkzeug - ist das zweite Teil 8" der Befestigungseinrichtung 8 in den Boden 6 der Windschutzeinrichtung 5 einsetzbar, wobei die ersten Vorsprünge 19 in die Ausnehmungen 10 der Öffnung 7 eingreifen, und wieder daraus entfernbar sind. Durch Verdrehen des zweiten Teils 8" der Befestigungseinrichtung 8 in die Position B - gekennzeichnet durch ein offenes Schloss - wird das zweite Teil 8'' der Befesfigungseinrichtung 8 fest mit dem Boden 6 der Windschutzeinrichtung 5 verbunden. Durch weiteres Verdrehen in die Position A - gekennzeichnet durch ein geschlossenes Schloss wird die Windschutzeinrichtung 5 fixiert, indem das zweite Teil 8'' der Befestigungseinrichtung 8 mit dem ersten Teil 8' der Befestigungseinrichtung 8 (siehe Figur 1) einen Formschluss eingeht. Anschliessend wird die metallische Bodenptatte 14 (siehe ebenfalls Figur 1) eingesetzt.

Die Windschutzeinrichtung 5 ist in üblicher Weise aufgebaut, wobei beispielsweise verschiebbare Seitenwände 15 und ein aufklappbarer Deckel 16 vorgesehen sein können. Selbstverständlich sind hier auch eine Vielzahl an möglich.

Die Darstellung ist selbstverständlich nur beispielhaft, es wäre auch möglich, die Befestigungsvorrichtung 8 in anderer Weise auszugesfalten, beispielsweise könnten das erste 8' und das zweite Teil 8" auch durch eine Schnappverbindung zusammenfügbar sein oder das zweite Teil 8" der Befestigungseinrichtung 8 in den Boden 6 eingeklinkt oder eingeschraubt werden. Weitere Möglichkeiten sind denkbar.

### Bezugszeichenliste

- 1: Waage
- 2: Waägengehäuse 3 Öffnung für Lästeinteitung am Waagengehäuse
- 4: Lasteinleitung
- 5: Windschutzeinrichtung
- 6: Boden der Windschutzeinrichtung
- 7: Öffnung am Boden der Windschutzeinrichtung
- 8: Befestigungseinrichtung
- 8': erstes Teil der Befestigungseinrichtung (am Gehäuse)
- 8": zweites Teil der Befestigungseinrichtung (an der Windschutzeinrichtung)
- 9: Zweite Vorsprünge
- 10: Ausnehmungen
- 11: Drehbegrenzungen
- 12: Einlaufschräge
- 13: Kanal 14 metallische Bodenplatte
- 15: Seitenwand
- 16: Deckel
- 17: Öffnung in der metallischen Bodenplatte
- 18: Nasen
- 19: Erste Vorsprünge
- 20: Aussparungen in Öffnung 3

## Patentansprüche

1. Waage (1) mit einem Waagengehäuse (2) zur Unterbringung der Funktionselemente der Waage (1), wobei das Waagengehäuse (2) für eine für den Betrieb aufgestellte Waage (1) an seiner Oberseite eine Öffnung (3) für den Durchtritt der Lasteinleitung (4) aufweist, und die Waage (1) mit einer Windschutzeinrichtung (5) ausgestattet ist, die als Ganzes vom Waagengehäuse (2) lösbar und an diesern fixierbar ist, wobei auch der Boden (6) der Windschutzeinrichtung (5) eine mit der Öffnung (3) des Waagengehäuses (2) korrespondierende Öffnung (7) für den Durchtritt der Lasteinleitung (4) aufweist, **dadurch gekennzeichnet, daß** die Wihdschutzeinrichtung (5) zentral an dem Durchtritt der Lasteinleitung (4) befestigbar ist, indem der Rand der Öffnung (3) des Waagengehäuses (2) als ein erstes Teil (8') einer Befestigungseinrichtung (8) ausgestaltet ist und mit einem zur Fixierung der Windschutzeinrichtung (5) am Waagengehäuse (2) ausgestalteten zweiten Teil (8'') der Befestigungseinrichtung (8), das an der Öffraung (7) des Bodens (6) der Windschutzeinrichtung (5) angeordnet ist, im Sinne einer formschlüssigen Verbindung zusammenwirkt.

2. Waage nach Anspruch 1, **dadurch gekennzeichnet, daß** das zweite Teil (8'') der Befestigungseinrichtung (8) mit dem Boden (6) der Windschützemcichtung (5) in lösbarer Weise verbunden ist.

3. Waage nach Anspruch 2, **dadurch gekennzeichnet, daß** das zweite Teil (8'') der Befestigungseinrichtung (8) ringförmig ausgebildet mit der Öffnung (7) des Bodens (6) der Windschutzeinrichtung (5) als Bajonettverschluß zusammenwirkt.

4. Waage nach Anspruch 3, **dadurch gekennzeichnet, daß** das zweite Teil (8'') der Befestigungseinrichtung (8) auskragende erste Vorsprünge (19) aufweist, welche in Ausnehmungert (10) der Öffnung (7) des Bodens (6) einfügbar sind, um durch Verdrehen in der Öffnung (7) dieses zweite Teil (8'') der Befestigungseinrichtung (8) mit dem Boden (6)zu verbinden.

5. Waage nach einem der Ansprüche 3 öder 4, **dadurch gekennzeichnet, daß** der Halt des zweiten Teils (8'') im Boden (6) durch einen zusätzlichen Kraftschluß gesichert ist.

6. Waage nach einem der Ansprüche 1 bis 5, **dadurch gekennzeichnet, daß** das zweite Teil (8'') der Befestigüngseinrichtung (8), an seiner Oberseite einen zum Auffangen und Ableiten von Flüssigkeiten ausgebildeten Kanal (13) aufweist.

7. Waage nach einem der Ansprüche 1 bis 6, **dadurch gekennzeichnet, daß** auch das erste (8') und das zweite Teil (8'') der Befestigungseinrichtung (8) als Bajonettverschluß zusammenwirken.

8. Waage nach Anspruch 7, **dadurch gekennzeichnet, daß** das zweite Teil (8'') der Befestigungseinrichtung (8) zweite Vorsprünge (9) aufweist, welche in Ausnehmungen (20) der Öffnung (3) des Bodens (6) einfügbar sind, um durch Verdrehen in der Öffnung (3) dieses zweite Teil (8'') der Befestigungseinrichtung (8) mit dem ersten Teil (8') der Befestigungsemrrchtung (8) zu verbinden.

9. Waage nach Anspruch 8, **dadurch gekennzeichnet, daß** die zweiten vorsprünge (9) mit einer als Anschlag dienenden Drehbewegungsbegrenzung (11) ausgestattet sind.

10. Waage nach Anspruch 8 oder 9, **dadurch gekennzeichnet, daß** eine Einlaufschräge (12) an den Vorsprüngen (9) dem zusätzlichen Kraftschluß dient.

11. Waage nach Anspruch 10, **dadurch gekennzeichnet, daß** ein Kraftschluß Zwischen dem ersten (8') und dern zweiten Teil (8'') der Befestigungseinrichtung (8) vorgesehen ist, der durch eine geringere Kraftaufwendung überwindbar ist als der Halt des zweiten Teils (8'') im Boden (6).

12. Waage, nach einem der Ansprüche 1 bis 11, **dadurch gekennzeichnet, daß** der Boden (6) der Windschutzeinrichtüng (5) aus einem Material mit derartigen federnden Eigenschaften besteht, daß eventuelle Stöße auf die Windschutzeinrichtung (5) nur gedämpft auf die Waage (1) übertragen werden

13. Waage nach einem der Ansprüche 1 bis 12, **dadurch gekennzeichnet, daß** eine metallische Bodenplatte (14) zur Erdung in den Boden (7) der Windschtzenichtung (5) einfügbar ist.

## Claims

1. Balance (1) with a balance housing (2) which serves to accommodate the functional elements of the balance (1) wherein, for a balance (1) that is set up for operation, the balance housing (2) has at its topside an opening (3) for the passage of the load-introducing member (4) and is equipped with a draft shield arrangement (5) which in its entirety can be separated from and attached to the balance housing (2), and wherein the floor (6) of the draft shield arrangement (5) also has an opening (3) that matches the opening (2) of the balance housing (2) for the passage of the load-introducing member (4), **characterized in that** the draft shield arrangement (5) is designed to be fastened centrally at the passage for the load-introducing member (4), the rim of the opening (3) of the balance housing (2) being configured as a first part (8') of a fastening arrangement (8) and cooperating in the sense of a form-locking connection with a second part (8") of the fastening arrangement (8) that is designed for the attachment of the draft shield arrangement (5) on the balance housing (2) and is arranged at the opening (7) of the floor (6) of the draft shield arrangement (5).

2. Balance according to claim 1, **characterized in that** the second part (8") of the fastening arrangement (8) is releasably connected to the floor (6) of the draft shield arrangement (5).

3. Balance according to claim 2, **characterized in that** the second part (8") of the fastening arrangement (8) is of a ring-shaped configuration and cooperates as a bayonet coupling with the opening (7) of the floor (6) of the draft shield arrangement (5).

4. Balance according to claim 3, **characterized in that** the second part (8") of the fastening arrangement (8) has outward-pointing first projections (19) which can be inserted into cutouts (10) of the opening (7) of the floor (6) in order to connect said second part (8") of the fastening arrangement (8) to the floor (6) by turning it in the opening (7).

5. Balance according to one of the claims 3 or 4, **characterized in that** the firm hold of the second part (8") in the floor (6) is secured through an additional force-locking engagement.

6. Balance according to one of the claims 1 to 5, **characterized in that** the second part (8") of the fastening arrangement (8) has at its topside a channel serving to catch and drain away liquids.

7. Balance according to one of the claims 1 to 6, **characterized in that** the first part (8') and the second part (8") of the fastening arrangement (8) likewise work together as a bayonet coupling.

8. Balance according to claim 7, **characterized in that** the second part (8") of the fastening arrangement (8) has second projections (9) which can be set into cutouts (20) of the opening (3) of the floor (6) in order to connect said second part (8") of the fastening arrangement (8) with the first part (8') of the fastening arrangement (8) by turning the second part (8") in the opening (3).

9. Balance according to claim 8, **characterized in that** the second projections (9) are equipped with a rotation-delimiting element (11) serving as a stop.

10. Balance according to claim 8 or 9, **characterized in that** a tightening ramp (12) at the projection (9) provides an additional force-locking engagement.

11. Balance according to claim 10, **characterized in that** a force-locking engagement between the first part (8') and the second part (8") of the fastening arrangement (8) is provided which can be overcome with a smaller force than the engagement of the second part (8") in the floor (6).

12. Balance according to one of the claims 1 to 11, **characterized in that** the floor (6) of the draft shield arrangement (5) is made of a material with suitable elastic properties so that impact forces which may be sustained by the draft shield arrangement (5) are transmitted to the balance (1) only with damped intensity.

13. Balance according to one of the claims 1 to 12, **characterized in that** a metallic floor plate (14) can be set into the floor (7) of the draft shield arrangement (5) to provide an electrical ground connection.

## Revendications

1. Balance (1) comprenant un carter de balance (2) pour le logement des éléments fonctionnels de la balance (1), le carter de balance (2) destiné à une balance (1) en cours d'utilisation présentant sur son côté supérieur une ouverture (3) pour le passage de l'introduction de charge (4), et la balance (1) étant équipée d'un dispositif de protection contre le vent (5) qui peut être détaché entièrement du carter de balance (2) et peut être fixé sur celui-ci, où le fond (6) du dispositif de protection contre le vent (5) présente une ouverture (7) correspondant à l'ouverture (3) du carter de balance (2) pour le passage de l'introduction de charge (4), **caractérisée en ce que** le dispositif de protection contre le vent (5) peut être fixé de façon centrale sur le passage de l'introduction de charge (4) du fait que le bord de l'ouverture (3) du carter de balance (2) est formant une première partie (8') d'un dispositif de fixation (8) et interagit dans le sens d'une liaison à complémentarité de formes avec une seconde partie (8'') du dispositif de fixation (8), conçue pour la fixation du dispositif de protection contre le vent (5) sur le carter de balance (2), la deuxième partie étant disposée sur l'ouverture (7) du fond (6) du dispositif de protection contre le vent (5).

2. Balance selon la revendication 1, **caractérisée en ce que** la seconde partie (8'') du dispositif de fixation (8) est reliée de façon amovible au fond (6) du dispositif de protection contre le vent (5).

3. Balance selon la revendication 2, **caractérisée en ce que** la seconde partie (8'') du dispositif de fixation (8), conçue en forme d'anneau, interagit avec l'ouverture (7) du fond (6) du dispositif de protection contre le vent (5) sous forme de fermeture à baïonnette.

4. Balance selon la revendication 3, **caractérisée en ce que** la seconde partie (8'') du dispositif de fixation (8) présente des premiers épaulements (19) en saillie, qui peuvent être insérées dans des évidements (10) de l'ouverture (7) du fond (6), afin de relier, par rotation dans l'ouverture (7), cette seconde partie (8'') du dispositif de fixation (8) au fond (6).

5. Balance selon l'une des revendications 3 ou 4, **caractérisée en ce que** le maintien de la seconde partie (8'') dans le fond (6) est assuré par une interaction supplémentaire de forces.

6. Balance selon l'une des revendications 1 à 5, **caractérisée en ce que** la seconde partie (8'') du dispositif de fixation (8) présente sur son côté supérieur un canal (13) conçu pour la réception et l'évacuation de liquides.

7. Balance selon l'une des revendications 1 à 6, **caractérisée en ce qu'**également la première partie (8') et la seconde partie (8'') du dispositif de fixation (8) interagissent sous forme de fermeture à baïonnette.

8. Balance selon la revendication 7, **caractérisée en ce que** la seconde partie (8'') du dispositif de fixation (8) présente des secondes épaulements (9), qui peuvent être insérées dans des évidements (20) de l'ouverture (3) du fond (6), afin de relier par rotation dans l'ouverture (3) cette seconde partie (8'') du dispositif de fixation (8) à la première partie (8') du dispositif de fixation (8).

9. Balance selon la revendication 8, **caractérisée en ce que** les secondes épaulements (9) sont équipées d'un dispositif de limitation de mouvement de rotation (11) faisant office de butée.

10. Balance selon la revendication 8 ou 9, **caractérisée en ce qu'**un chanfrein d'entrée (12) sur les épaulements (9) sert à l'interaction supplémentaire de forces.

11. Balance selon la revendication 10, **caractérisée en ce qu'**une interaction de forces est prévue entre la première partie (8') et la seconde partie (8'') du dispositif de fixation (8), qui peut être surmontée par une application de force plus faible que le maintien de la seconde partie (8'') dans le fond (6).

12. Balance selon l'une des revendications 1 à 11, **caractérisée en ce que** le fond (6) du dispositif de protection contre le vent (5) est à base d'un matériau présentant de telles propriétés élastiques, que d'éventuels chocs exercés sur le dispositif de protection contre le vent (5) ne sont transmis que de façon amortie à la balance (1).

13. Balance selon l'une des revendications 1 à 12, **caractérisée en ce qu'**une plaque de fond (14) métallique pour la mise à la terre peut être insérée dans le fond (7) du dispositif de protection contre le Vent (5).
